# EUROPÄISCHE PATENTSCHRIFT

(11) **EP 2 628 574 B1**
(45) Veröffentlichungstag und Bekanntmachung des Hinweises auf die Patenterteilung: **12.04.2023**
(21) Anmeldenummer: 12155944.7
(22) Anmeldetag: 17.02.2012
(51) Int. Cl.: G05B 19/04

(54) **Verfahren zur Simulation einer Bearbeitungsmaschine**
Method for simulating a processing machine
Procédé de simulation d'une machine de traitement

(43) Veröffentlichungstag der Anmeldung: 21.08.2013
(73) Patentinhaber: Siemens Aktiengesellschaft, 80333 München (DE)
(72) Erfinder: Hamm, Carsten, Dr., 91058 Erlangen (DE); Pernozzoli, Arno, Dr., 91091 Grossenseebach (DE)
(74) Vertreter: Siemens Patent Attorneys

(56) Entgegenhaltungen:
- US-A1- 2001 052 008
- US-A1- 2009 089 030
- US-A1- 2010 049 336
- RODERO-MERINO L ET AL: "From infrastructure delivery to service management in clouds", FUTURE GENERATIONS COMPUTER SYSTEMS, ELSEVIER SCIENCE PUBLISHERS. AMSTERDAM, NL, Bd. 26, Nr. 8, 1. Oktober 2010 (2010-10-01), Seiten 1226-1240, XP027196259, ISSN: 0167-739X [gefunden am 2010-03-06]

## Beschreibung

Die Erfindung betrifft ein Verfahren zur Simulation zumindest einer Bearbeitungsmaschine, wie zum Beispiel einer Werkzeugmaschine, einem Roboter oder dergleichen.

Eine solche Simulation eignet sich zum Beispiel für eine "virtuelle" Inbetriebnahme der jeweiligen Bearbeitungsmaschine, zum Durchspielen von Trainingsszenarien und Ähnlichem. Dafür wird bisher eine auf einem Rechner eines Bearbeiters, also zum Beispiel einem Personalcomputer oder dergleichen, installierte virtuelle Maschine verwendet. Aufgrund der rechenintensiven Verfahren bei einer solchen Simulation sind allerdings besonders leistungsfähige Rechner mit einer entsprechenden Rechenleistung sowie einer entsprechenden Speicherkapazität erforderlich.

Aus der US 2010/049336 A ist ein Automatisierungssystem mit einer integrierten Entwicklungsumgebung bekannt. Die Entwicklungsumgebung ermöglicht auch die Simulation gesteuerter Einheiten.

Die US 2009/089030 A beschreibt eine Simulation einer industriellen Produktionsanlage um zum Beispiel vor deren tatsächlicher Errichtung Erkenntnisse für deren Optimierung zu gewinnen.

Eine Aufgabe der Erfindung besteht entsprechend darin, die Möglichkeiten einer Simulation zumindest einer Bearbeitungsmaschine der eingangs genannten Art zu verbessern und/oder zu erweitern.

Diese Aufgabe wird erfindungsgemäß mit einem Verfahren mit den Merkmalen des Anspruchs 1 gelöst. Dazu ist bei einem Verfahren zur Simulation einer Bearbeitungsmaschine, wie einer Werkzeugmaschine, einem Roboter oder dergleichen, vorgesehen, dass die Simulation in einer Rechnerwolke (Cloud) erfolgt, wobei die Rechnerwolke zumindest einen Rechner umfasst, der zur Ausführung web-fähiger Simulationsdienste geeignet ist, wobei in der Rechnerwolke für die simulierte Bearbeitungsmaschine ein im Folgenden als digitaler Schatten bezeichneter Repräsentant gebildet wird und wobei dem digitalen Schatten eine Konfiguration und ein Zustand der simulierten Bearbeitungsmaschine eingeprägt wird.

Der Vorteil der Erfindung besteht vor allem darin, dass durch die Simulation in einer Rechnerwolke die nahezu unbegrenzten Ressourcen einer solchen Rechnerwolke ausgenutzt werden können, so dass eine Simulation der Bearbeitungsmaschine, vor allem eine Qualität, eine Geschwindigkeit und/oder eine Detailtiefe der Simulation, nicht mehr durch die Ressourcen eines lokalen Rechners beschränkt ist.

Der Vorteil der Erfindung besteht weiterhin darin, dass dem Repräsentanten der simulierten Bearbeitungsmaschine, also dem digitalen Schatten der Bearbeitungsmaschine, eine Konfiguration und ein Zustand der simulierten Bearbeitungsmaschine eingeprägt wird. Durch das Einprägen der Konfiguration der simulierten Bearbeitungsmaschine ist sichergestellt, dass der digitale Schatten der simulierten Bearbeitungsmaschine zum Beispiel hinsichtlich der Kinematik davon umfasster Achsen, Bewegungsbereiche und so weiter entspricht. Durch eine Einprägung eines jeweiligen Zustands der simulierten Bearbeitungsmaschine auch beim digitalen Schatten ist gewährleistet, dass ein simulierter Bewegungsablauf des digitalen Schattens exakt mit einer momentanen Stellung der Bearbeitungsmaschine beginnen kann, so dass zum Beispiel Bewegungsabläufe sukzessive simuliert werden können und bei einer erfolgreichen Simulation für die reale Bearbeitungsmaschine übernommen werden können.

Zur Simulation der oder jeder jeweiligen Bearbeitungsmaschine mit zumindest einem digitalen Schatten ist in der Cloud ein Simulationssystem verfügbar, das alle notwendigen Softwaredienste, insbesondere Simulationsservices, anbietet, um unterschiedliche Anwendungsszenarien wie zum Beispiel eine Unterstützung einer Inbetriebnahme, eine Unterstützung einer Diagnose, eine Unterstützung von Trainingsmaßnahmen, und so weiter mittels verfügbarer Browsertechnologien zu realisieren. Auf Basis des digitalen Schattens ist das vorausschauende Simulieren von zukünftigen Bewegungsvorgängen auf Basis des aktuellen Zustands der Bearbeitungsmaschine möglich.

Ein weiterer Vorteil der Erfindung besteht darin, dass bei einer Virtualisierung auf einem lokalen Rechner eine Verwendung der gleichen virtuellen Maschine/Bearbeitungsmaschine durch mehrere Personen für mehrere Zwecke heute nur durch Ablage der zugrunde liegenden vollständigen Abbilder der virtuellen Maschine in gemeinsame Netzverzeichnisse möglich ist. Aus Gründen der Laufzeit müssen die Abbilder der virtuellen Maschine unter den heutigen technologischen Bedingungen auf ein lokales Laufwerk kopiert werden. Dies dauert aufgrund des Speicherbedarfs der Abbilder der virtuellen Maschine relativ lange. Eine Nachführung und ein Abgleich der realen Maschine mit der virtuellen Maschine ist heute in keinem bekannten System realisiert. Des Weiteren ist aus Gründen der Verfügbarkeit und der Performance heute in keinem bekannten System eine Onlineberechnung von Bearbeitungsoperationen realisiert.

Mit den grundsätzlich unbegrenzten Rechenleistungs- und Speicherressourcen in der Cloud kann die Simulation einer automatisierten Bearbeitungsmaschine an die tatsächlichen Gegebenheiten angepasst werden. Damit ist auch eine Simulation einer automatisierten Bearbeitungsmaschine mit mehreren Steuerungen, zum Beispiel einer NC-Steuerung, einer speicherprogrammierbaren Steuerung (SPS) und einer Mehrzahl von Antrieben möglich. Genauso ist eine Simulation einer automatisierten Zelle mit einer Mehrzahl von Bearbeitungsmaschinen und zum Beispiel einer Mehrzahl von NC-Steuerungen und zumindest einer speicherprogrammierbaren Steuerung und so weiter möglich. Der Ansatz gemäß der Erfindung sieht vor, dass web-fähige Simulationsdienste das Rückgrat für die Realisierung des digitalen Schattens zumindest einer Bearbeitungsmaschine bilden. Die in der Cloud zur Verfügung stehende Rechenleistung kann dabei zur Durchführung der rechenintensiven Operationen verwendet werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn eine Möglichkeit besteht, dass eine Konfiguration des digitalen Schattens der simulierten Bearbeitungsmaschine eingeprägt wird, ist eine einfache Möglichkeit für eine Inbetriebnahme und/oder eine Umkonfiguration der jeweiligen Bearbeitungsmaschine gegeben. Die Bearbeitungsmaschine kann zunächst virtuell in der Cloud getestet werden. Sobald alle durchgeführten Tests zufriedenstellend verlaufen, ist eine brauchbare Konfiguration für die Bearbeitungsmaschine gefunden. Diese Konfiguration kann der realen Bearbeitungsmaschine eingeprägt werden, so dass sich im Anschluss an die Simulation der Bearbeitungsmaschine die reale Bearbeitungsmaschine wie zuvor die virtuelle Bearbeitungsmaschine verhält. Als Daten, die eine solche Konfiguration beschreiben (Konfigurationsdaten) kommen Daten in Betracht, die Verfahrbereichsgrenzen der einzelnen Achsen/Freiheitsgrade definieren. Weiter kommen als Konfigurationsdaten zum Beispiel auch Maximalgeschwindigkeiten der einzelnen Achsen/Freiheitsgrade in Betracht. Schließlich kann in den Konfigurationsdaten auch ein Ausbauumfang einer Bearbeitungsmaschine kodiert sein; bei einer Drehmaschine zum Beispiel ob es sich um eine Drehmaschine mit einer Gegenspindel und/oder einem Reitstock und/oder einer Lünette und so weiter handelt. Des Weiteren kann durch die Konfigurationsdaten zum Beispiel auch eine Kapazität eines Werkzeugwechslers festgelegt sein. Naturgemäß sind diese Beispiele nicht abschließend, so dass über die Konfigurationsdaten auch andere oder zusätzliche Eigenschaften einer Bearbeitungsmaschine beschrieben sein können.

Es ist vorgesehen, dass mit einem in der Rechnerwolke zur Verfügung gestellten CAM-Dienst und dem digitalen Schatten der simulierten Bearbeitungsmaschine eine Berechnung und Validierung eines Werkzeugpfads der simulierten Bearbeitungsmaschine erfolgt. Nach einer solchen Berechnung oder Validierung des Werkzeugpfads kann dieser für die reale Bearbeitungsmaschine übernommen werden. Wenn die Berechnung des Werkzeugpfads in die Cloud ausgelagert wird, besteht der Vorteil dieser Ausführungsform des Verfahrens vor allem darin, dass die Ressourcen der Cloud genutzt werden und nicht lokal zur Verfügung stehen müssen. Die zusätzliche Validierung des Werkzeugpfads erfordert unter Umständen im Vergleich zu einer Berechnung des Werkzeugpfads nochmals weitere Ressourcen, insbesondere hinsichtlich der Rechenleistung. Wenn auch die Validierung des Werkzeugpfads in die Cloud ausgelagert werden kann, brauchen insofern auch die dafür notwendigen Ressourcen nicht lokal zur Verfügung gestellt werden. Nach der Validierung des Werkzeugpfads kann dieser unmittelbar für die reale Bearbeitungsmaschine übernommen werden. Es besteht dann die berechtigte Erwartung, dass der validierte Werkzeugpfad kollisionsfrei und unter Einhaltung der kinematischen und sonstigen Randbedingungen der Bearbeitungsmaschine ausgeführt werden kann. Tests an der realen Bearbeitungsmaschine werden dann unter Umständen unnötig oder sind zumindest auf ein Minimum reduziert.

Bei einer Ausführungsform des Verfahrens ist vorgesehen, dass ein Zustand, also jeweils momentane Positionen, Geschwindigkeiten und/oder Beschleunigungen, der simulierten Bearbeitungsmaschine kontinuierlich in der virtuellen Bearbeitungsmaschine, also im digitalen Schatten der simulierten Bearbeitungsmaschine, nachgeführt wird. Dies ermöglicht eine Fehlersuche. Des Weiteren sind Diagnosen möglich. Schließlich erlaubt eine solche Nachführung des aktuellen Zustands der Bearbeitungsmaschine im digitalen Schatten auch eine Vorausschau und schließlich sogar eine Produktionsplanung.

Für alle bisher beschriebenen Aspekte der Simulation einer Bearbeitungsmaschine kommt in Betracht, dass die Simulation entsprechend einer vorgegebenen oder vorgebbaren Skalierungstiefe erfolgt. Die Beachtung einer Skalierungstiefe hat den Vorteil, dass die Simulation zum Beispiel nur diejenigen Aspekte erfasst, die im jeweiligen Simulationsszenario für den Benutzer relevant sind. Zudem begrenzt eine Beachtung einer Skalierungstiefe auch den Ressourcenbedarf in der Cloud, wobei in dieser Hinsicht im Wesentlichen die Menge der von und zur Cloud zu übertragenden Daten von Bedeutung ist. Eine Begrenzung der Skalierungstiefe hilft also, die Menge der zu übertragenden Daten zu begrenzen, so dass zum Beispiel eine Echtzeitsimulation möglich wird.

Eine Ausführungsform des Verfahrens, bei der die Simulation entsprechend einer vorgegebenen oder vorgebbaren Skalierungstiefe erfolgt, zeichnet sich dadurch aus, dass bei der Simulation der Bearbeitungsmaschine für den dafür verwendeten digitalen Schatten eine Zeitskalierung erfolgt. Ein Anwendungsszenario einer solchen Zeitskalierung ist eine verlangsamte Simulation, also gewissermaßen eine gebremste Zeit in der Simulation, um mit den zur Verfügung stehenden oder zur Verfügung gestellten Ressourcen und der Bandbreite der Kommunikationsverbindungen die gewünschte Simulationstiefe zu realisieren. Außerdem ermöglicht eine verlangsamte Simulation gleichsam eine Betrachtung der Simulation in Zeitlupe. Ein anderes Szenario für eine Zeitskalierung besteht darin, dass die Zeitbasis beschleunigt werden kann, um eine erste, schnelle Übersicht über Simulationsergebnisse zu erhalten.

Für alle bisher beschriebenen Aspekte des Verfahrens kommt des Weiteren in Betracht, dass die Simulation der Bearbeitungsmaschine in der Rechnerwolke mit modularen und/oder skalierbar gestalteten Simulationsdiensten erfolgt. Eine Modularität der Simulationsdienste gewährleistet das einfache Zu- und Abschalten bestimmter Aspekte der Simulation. Eine Skalierbarkeit der Simulationsdienste ermöglicht einen Einfluss auf zum Beispiel eine Detailtiefe der Simulation und/oder eine der Simulation zugrunde liegende Zeitbasis.

Die Erfindung und spezielle Einzelaspekte der Erfindung sind zur Implementation in Software vorgesehen. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Steuerungseinrichtung oder ein Antriebssystem, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch vereinfachte Darstellung einer Simulation einer realen Bearbeitungsmaschine mit lokaler Hardware,
- FIG 2: eine schematisch vereinfachte Darstellung einer zum Beispiel im Internet oder einem Intranet gebildeten Rechnerwolke (Cloud) mit einem dort, im Gegensatz zur bisherigen Verwendung lokaler Hardware, gebildeten digitalen Schatten einer realen Bearbeitungsmaschine,
- FIG 3: eine zusammengefasste und schematisch vereinfachte Darstellung von in der Cloud für die Simulation einer Bearbeitungsmaschine nutzbaren Diensten und
- FIG 4: eine schematisch vereinfachte Darstellung einer Basis für eine Skalierung einer Simulation mit verschiedenen Ebenen und damit Skalierungstiefen entsprechenden Funktionalitäten einer Simulation.

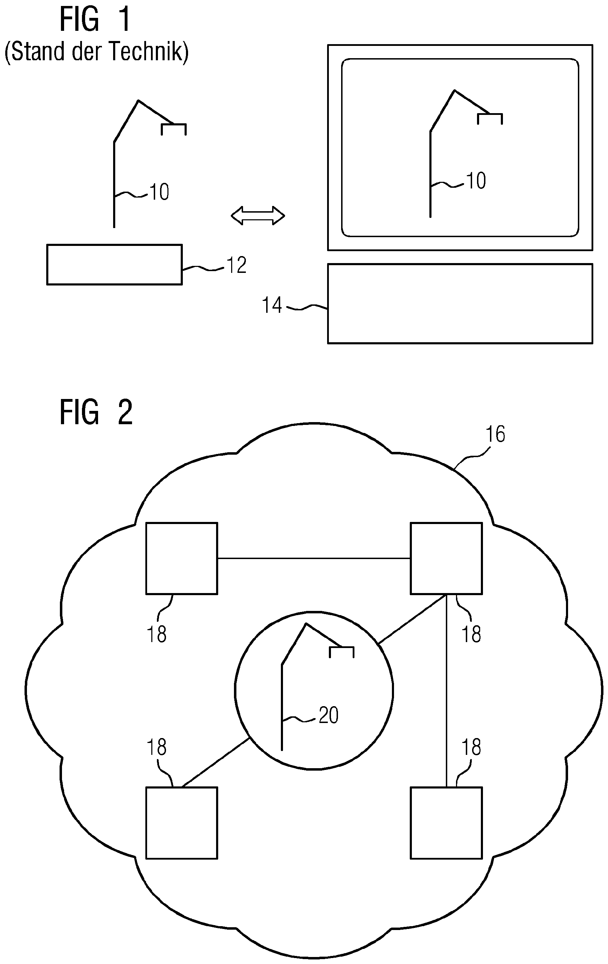

FIG 1 zeigt als Beispiel für eine Bearbeitungsmaschine 10 einen schematisch stark vereinfachten Roboter. Eine Steuerung und/oder Überwachung der Bearbeitungsmaschine 10 erfolgt mit einer Steuerungseinrichtung 12. Bisherige Simulationen der Bearbeitungsmaschine 10 sind mit lokaler Hardware 14, also zum Beispiel einem lokalen Rechner nach Art eines Personalcomputers, erfolgt. Die Qualität der Simulation war dabei naturgemäß durch die Ressourcen der lokalen Hardware 14 beschränkt.

Hier wird vorgeschlagen, dass die Simulation zumindest einer Bearbeitungsmaschine 10 in einer in der Fachterminologie als Cloud bezeichneten Rechnerwolke 16 erfolgt. Die Rechnerwolke 16 ist in der Darstellung in FIG 2 auch als Wolke gezeigt. Tatsächlich handelt es sich bei einer solchen Rechnerwolke/ Cloud 16 um eine Mehrzahl untereinander kommunikativ verbundener Rechner 18, so dass eine Möglichkeit zur gemeinschaftlichen Nutzung der von den jeweiligen Rechnern 18 bereitgestellten Ressourcen wie insbesondere Rechenleistung und Speicherkapazität gegeben ist. In der Rechnerwolke 16 befindet sich zumindest ein Rechner 18, üblicherweise eine Vielzahl von Rechnern 18, der beziehungsweise die zur Ausführung web-fähiger Simulationsdienste geeignet ist beziehungsweise sind, so dass der oder jeder Rechner 18, der in dieser Hinsicht ausgestattet ist, zur Simulation der Bearbeitungsmaschine 10 in Betracht kommt. In der Rechnerwolke 16 wird dann für die simulierte Bearbeitungsmaschine 10 (FIG 1) ein digitaler Schatten 20 gebildet. Dem digitalen Schatten 20 werden zur Simulation der realen Bearbeitungsmaschine 10 eine Konfiguration (Anzahl und Kinematik der Achsen, Bewegungsbereiche, Minimal-, Soll- und Maximalgeschwindigkeit oder -beschleunigung, und so weiter) und ein Zustand (momentane Position, Geschwindigkeit und ggf. Beschleunigung der Achsen und so weiter) dieser Bearbeitungsmaschine 10 eingeprägt.

Eine Qualität der Simulation ist jetzt nicht mehr durch die Ressourcen einer lokalen Hardware 14 (FIG 1) begrenzt, sondern für die Simulation kann auf sämtliche in der Cloud 16 zur Verfügung stehende oder zur Verfügung gestellte Ressourcen zugegriffen werden, so dass die Simulation schneller, besser, umfangreicher und/oder mit mehr Details erfolgen kann, so dass unter Umständen bisher nicht mögliche Simulationen durchgeführt werden können, zum Beispiel eine Simulation einer oder mehrerer Bearbeitungsmaschinen 10 zusammen mit einer Simulation der oder jeder für deren Ansteuerung notwendigen Steuerung (NC-Steuerung und/oder SPS) und dass die Simulationsergebnisse insgesamt aussagekräftiger und belastbarer werden.

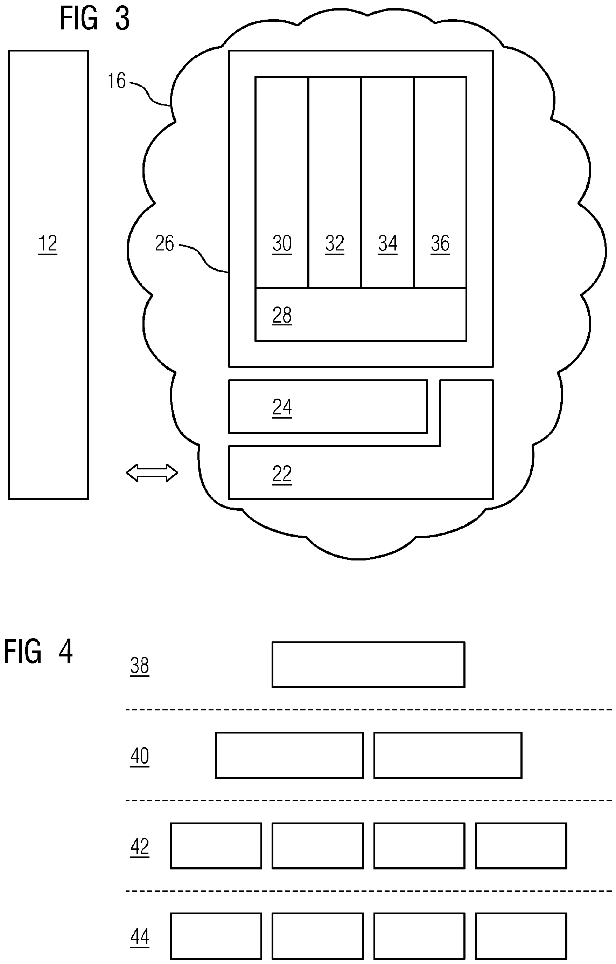

FIG 3 zeigt zur Verdeutlichung der an der Simulation beteiligten Funktionseinheiten zunächst auf der linken Seite die Steuerungseinrichtung 12 (vgl. FIG 1) der realen Bearbeitungsmaschine 10 (FIG 1). Zur Simulation der Bearbeitungsmaschine 10 in der Cloud 16 als digitaler Schatten 20 (FIG 2) sind entsprechende Dienste vorgesehen, die in FIG 3 auf der rechten Seite und innerhalb der die Cloud 16 symbolisierenden Wolke dargestellt sind. Zum Zugriff auf die Simulationsdienste ist eine Schnittstelleneinheit 22 vorgesehen. Als Schnittstelle fungiert dabei einer der Rechner 18 der Cloud 16 und entsprechend weist dieser Rechner 18 eine Implementation der Schnittstelleneinheit 22 auf. Die Schnittstelleneinheit 22 fungiert einerseits als Schnittstelle für die bidirektionale Datenübertragung von der Steuerungseinrichtung 12 zur Cloud 16 und umgekehrt sowie andererseits als Schnittstelle für die in der Cloud 16 bereitgestellten Simulationsdienste. Zu diesen Simulationsdiensten gehören zum Beispiel CAM-Dienste 24 sowie weitere Simulationsdienste 26. Diese und die im Folgenden besprochenen Dienste werden in der Cloud 16 insgesamt zur Verfügung gestellt und können demnach jeweils auf einzelnen oder mehreren Rechnern 18 ablaufen. Für die weiteren Simulationsdienste 26 wird mittels eines Zeitdienstes 28 eine gemeinsame Zeitbasis verwaltet. Auf diese greifen insbesondere folgende Simulationsdienste zu: eine virtuelle numerische Steuerung 30, eine virtuelle speicherprogrammierbare Steuerung 32, ein oder mehrere Simulationsdienste für virtuelle Antriebe 34 sowie ein oder mehrere Dienste für mechatronische Simulationen 36. Eine Verteilung der Dienste 24-36 in der Cloud 16 auf einzelne oder mehrere Rechner 18 sowie ein Austausch von Daten verteilt ausgeführter Dienste 24-36 erfolgt mit Standard-Webtechnologien. Ein Datenaustausch verteilt aufgeführter Dienste kann beispielsweise über standardisierte CORBA-Schnittstellen, Pipes, Sockets (z.B. WebSockets) oder durch direkten Aufruf von Web-Services API Funktionen erfolgen. Sofern einzelne Dienste mit einer Web-Service API versehen sind, ist die Verwendung dieser API vorzuziehen, da diese gegebenenfalls auch eine Verschlüsselung ermöglicht und üblicherweise auch in geschützten Umgebungen, nämlich zum Beispiel Firewalls oder dergleichen, einfach zu realisieren und zu konfigurieren ist.

Der Datenaustausch von oder zur Cloud 16, also der Datenaustausch zwischen zumindest einer Steuerungseinrichtung 12 und der in der Cloud 16 vorgesehenen Kommunikationsschnittstelle 22 erfolgt dabei über Internet oder Intranet. Für eine solche Datenübertragung kann auf Standard-Webtechnologien zurückgegriffen werden. Dafür kommen für die bidirektionale Kommunikation zwischen einem Webclient und einem Webserver die Verwendung eines Real-Time-Streaming-Protokolls (RFC 2326) oder das Stream-Control-Transmission-Protokoll (RFC 3286) oder die Verwendung des im HTML5-Standard verabschiedeten Websocket-Protokolls in Betracht. Vorteile der Verwendung des Websocket-Protokolls sind die Möglichkeit, die Kommunikation mittels Standard-SSL-Verfahren verschlüsseln zu können, der geringe und nur während des Verbindungsaufbaus entstehende Protokoll-Overhead sowie die gegenüber den Streaming-Protokollen höhere Robustheit der Kommunikation.

Im Falle der Anbindung über Internet ist zu berücksichtigen, dass die Anforderungen an die Verfügbarkeit der Cloud 16 sehr hoch sind und daher dedizierte "Quality of Service"-Netzwerke erfordern. Die Intranetanbindung an ein internes Rechenzentrum kann diese Anforderung oftmals erfüllen, denn es besteht der Vorteil, dass das interne Rechenzentrum und die davon umfassten Rechner 18, die in der so gebildeten Cloud 16 zur Verfügung stehen, von einer zentralen Stelle gewartet und überwacht werden, so dass die Verfügbarkeit üblicherweise sichergestellt ist.

Die web-fähigen Simulationsdienste 28, 30, 32, 34, 36 bilden das Rückgrat (Backbone) für die Realisierung des digitalen Schattens 20 einer simulierten Bearbeitungsmaschine 10. Eine Konfiguration und ein Zustand der simulierten Bearbeitungsmaschine 10 kann in die Cloud 16 übertragen werden und dem dort realisierten digitalen Schatten 20 der Bearbeitungsmaschine 10 eingeprägt werden. Dies gewährleistet, dass die reale Bearbeitungsmaschine 10 und ihr digitaler Schatten 20 hinsichtlich der jeweiligen Kinematik übereinstimmen. Wenn ein jeweiliger Zustand der realen Bearbeitungsmaschine 10 auch dem jeweiligen digitalen Schatten 20 in der Cloud 16 eingeprägt wird, kann zum Beispiel eine Simulation der Bearbeitungsmaschine 10 mittels des digitalen Schattens 20 unmittelbar ausgehend von einem aktuellen Zustand, also zum Beispiel einer aktuellen Position der Bearbeitungsmaschine 10 und der davon jeweils umfassten Achsen, beginnen.

Wenn insbesondere nach zufriedenstellendem Abschluss einer Simulation einer Bearbeitungsmaschine 10 in der Cloud 16 eine Konfiguration des digitalen Schattens 20 der simulierten Bearbeitungsmaschine 10 eingeprägt wird, können die bei der Simulation gewonnenen Erkenntnisse, soweit sie zu einer Änderung der Konfiguration des digitalen Schattens 20 geführt haben, unmittelbar als Konfiguration der simulierten Bearbeitungsmaschine 10 verwendet werden. Eine an dieser Stelle mögliche Konfigurationsänderung ist zum Beispiel eine neue oder geänderte Parametrierung von Schutzräumen, in welche die jeweilige Bearbeitungsmaschine 10 aufgrund von Kollisionsgefahren oder dergleichen nicht hineinfahren darf. Des Weiteren kann sich eine Konfigurationsänderung auch auf eine Reihenfolge von Einzeloperationen der jeweiligen Bearbeitungsmaschine 10 beziehen, wenn zum Beispiel eine geänderte Reihenfolge eine schnellere oder in sonstiger Weise günstigere Abarbeitung des jeweiligen Bearbeitungsprogramms ermöglicht. Der Begriff Konfiguration umfasst also nicht nur eine Konfiguration der Bearbeitungsmaschine 10, sondern ggf. auch eine Konfiguration der von der Bearbeitungsmaschine 10 auszuführenden Aktionen.

Weitere Möglichkeiten ergeben sich aus der Verlagerung von Operationen, die normalerweise oder bisher die Steuerungseinrichtung 12 ausgeführt hat, in die Cloud 16. Die in der Cloud 16 zur Verfügung stehende Rechenkapazität kann zur Durchführung rechenintensiver Operationen, beispielsweise der Berechnung und/oder Validierung eines Werkzeugpfads, verwendet werden. Hierfür wird als Simulationsdienst ein CAM-Dienst 24 genutzt. Der digitale Schatten 20 ist dabei eine wesentliche Grundlage für die korrekte Berechnung und Validierung des Werkzeugpfads durch den CAM-Dienst 24, da dieser neben dem Zustand der simulierten Bearbeitungsmaschine 10 auch die notwendigen Informationen und die Algorithmik für die Bahnberechnung beinhalten soll.

Die Infrastruktur des Internet/Intranets und der cloudbasierten Dienste, deren Eigenschaften unter dem Stichwort Web 2.0 zusammengefasst sind und diskutiert werden, erlauben in vorteilhafter Weise das verteilte Arbeiten an virtuellen Maschinen, also zum Beispiel an digitalen Schatten 20 einer real existierenden Bearbeitungsmaschine 10. Der Zugriff und die Datenablage auf solche virtuellen Maschinen/digitalen Schatten 20 erfolgt für den jeweiligen Anwender transparent, so dass dieser mitunter gar nicht weiß oder nicht wissen muss, wo und wie eine bestimmte Funktion ausgeführt wird. Darüber hinaus sind die heute bestehenden Einschränkungen bei einer lokalen Ablage von Abbildern virtueller Maschinen aufgehoben. Insbesondere ergibt sich die Möglichkeit, dass mehrere Personen an einer gemeinsamen Datenbasis arbeiten und so die gleiche virtuelle Maschine verwenden. Die Zusammenarbeit kann dabei gleichzeitig oder entkoppelt erfolgen. So können analog zum Entstehungsprozess einer realen Bearbeitungsmaschine 10 die Teilmodelle für Steuerung, Antrieb, Mechanik und so weiter von den entsprechenden Fachbereichen kreiert und gepflegt werden. Auf Basis einer Lösung zum Schutz der jeweils involvierten Daten wird die Zusammenarbeit über Firmengrenzen hinweg möglich. Steuerungskomponenten, die die jeweiligen Hersteller virtuell zur Verfügung stellen, können wie im realen Maschinen- und Anlagenbau kombiniert und gemeinsam engineert werden. In einem serviceorientierten Architekturansatz kann der Aufbau der Simulation derart gestaltet werden, dass - abhängig vom Anwendungsfall und den zur Verfügung stehenden Ressourcen - auf verschiedenen Ebenen eine Skalierung erfolgt oder zumindest möglich ist. Dazu gehört, dass je nach Anwendungsfall die erforderliche Simulationstiefe skaliert wird. Dabei kann von der reinen Programm- und Ablaufsimulation bis hin zur Simulation einzelner Antriebseinheiten der Bearbeitungsmaschine inklusive der mechatronischen Komponenten und Nebenaggregate skaliert werden. Eine Skalierung kann auch auf Basis der simulierten Zeit erfolgen. Dabei kann innerhalb der Cloud 16 eine gemeinsame Systemuhr/Zeitbasis 28 gebremst werden, um zum Beispiel die gewünschte Simulationstiefe realisieren zu können. Alternativ kann die in der Cloud 16 für die Simulation verwendete Zeitbasis auch beschleunigt werden, um eine erste, schnelle Übersicht über die Simulationsergebnisse zu erhalten. Schließlich kann in Abhängigkeit von der Performance der Kommunikationsinfrastruktur eine Skalierung hinsichtlich der Synchronisation zwischen der oder jeder realen Bearbeitungsmaschine 10 und dem jeweiligen digitalen Schatten 20 realisiert werden.

FIG 4 veranschaulicht einzelne Aspekte dieser Skalierung, nämlich dass die Simulation entsprechend einer vorgegebenen oder vorgebbaren Skalierungstiefe erfolgt. Danach ist auf einer oberen Ebene 38 und entsprechend einer minimalen Skalierungstiefe als Simulationsfunktionalität eine Prozess- und/ oder Programmsimulation vorgesehen (verdeutlicht durch den in dieser Ebene 38 gezeigten Block). Auf einer nächstniedrigeren Simulationsstufe 40 sind als Simulationsfunktionalität eine NC-Simulation und/oder eine SPS-Simulation vorgesehen, jeweils veranschaulicht durch die beiden Blöcke auf dieser Ebene 40. In einer nächstniedrigen Simulationsebene 42 sind als Simulationsfunktionalität eine Antriebssimulation, eine Motorsimulation, eine Simulation von Hydraulikaggregaten und eine Simulation von Pneumatikaggregaten, jeweils dargestellt durch die Blöcke auf dieser Ebene 42, vorgesehen. In zumindest einer weiteren, nochmals hierarchisch tiefer angesiedelten Simulationsebene 44 erfasst die Simulation auch eine Simulation mechatronischer Teile, sonstiger Komponenten, ein Simulation von Ventilen und eine Simulation sonstiger Elemente und Aggregate, ebenfalls dargestellt durch die vier Blöcke/Simulationsfunktionalitäten auf dieser Ebene 44.

FIG 4 stellt also in vertikaler Richtung Ebenenbeschreibungen und damit korrelierte Simulationstiefen dar. In horizontaler Richtung ist in jeder Ebene 38-44 ein Beispiel für eine mögliche Modularität der Simulation gezeigt. Der jeweilige Simulationsbedarf kann auf Basis einer solchen Skalierung und Strukturierung der Simulation abgeleitet werden und zwar zum einen anhand der Anzahl der in einer Ebene beteiligter Simulationsmodule und zum anderen anhand der Rechenkomplexität der jeweiligen Simulationsebene 38-44. Die Verlagerung in die Cloud 16 hat dann den Vorteil, dass die Simulation strukturiert und quasi iterativ erfolgen kann. Zum einen können komplette Ebenen 38-44 in der Cloud 16 simuliert werden. Zum anderen können daraus resultierende Simulationsergebnisse in höhere Ebenen aggregiert weiter verwendet werden. Die Weiterverwendung kann dabei sowohl lokal wie auch entfernt in der Cloud 16 erfolgen. Die Simulation in der Cloud 16 kann auf diese Weise relativ feingranular erfolgen und abgerufen werden; Funktionalitäten, die lokal nicht oder nicht mit vertretbarem Aufwand oder nicht in der an sich notwendigen Geschwindigkeit bearbeitet werden können, werden in die Cloud 16 gegeben.

## Patentansprüche

1. Verfahren zur Simulation einer Bearbeitungsmaschine (10) in einer Rechnerwolke (16),
wobei die Rechnerwolke (16) eine Mehrzahl untereinander kommunikativ verbundener Rechner (18) umfasst, die zur Ausführung web-fähiger Simulationsdienste (24,26,28,30,32,34,36) geeignet sind,
wobei in der Rechnerwolke (16) als Repräsentant der simulierten Bearbeitungsmaschine (10) ein digitaler Schatten (20) gebildet wird,
**dadurch gekennzeichnet,**
**dass** dem digitalen Schatten (20) eine Konfiguration und ein Zustand der simulierten Bearbeitungsmaschine (10) eingeprägt wird,
**dass** mit einem in der Rechnerwolke (16) zur Verfügung gestellten CAM-Dienst und dem digitalen Schatten (20) der simulierten Bearbeitungsmaschine (10) eine Berechnung und Validierung eines Werkzeugspfads der simulierten Bearbeitungsmaschine (10) erfolgt und
**dass** im Anschluss an einen Test der simulierten Bearbeitungsmaschine (10) in der Rechnerwolke eine Konfiguration des digitalen Schattens (20) der simulierten Bearbeitungsmaschine (10) eingeprägt wird.

2. Verfahren nach Anspruch 1, wobei ein Zustand der simulierten Bearbeitungsmaschine (10) kontinuierlich im digitalen Schatten (20) nachgeführt wird.

3. Verfahren nach einem der vorangehenden Ansprüche, wobei die Simulation entsprechend einer vorgegebenen oder vorgebbaren Skalierungstiefe erfolgt.

4. Verfahren nach Anspruch 3, wobei für eine Simulation entsprechend einer vorgegebenen oder vorgebbaren Skalierungstiefe eine Mehrzahl von Simulationsebenen (38,40,42,44) definiert und in jeder Simulationsebene (38,40,42,44) für eine Modularität der Simulation jeweils zumindest eine Simulationsfunktionalität vorgesehen sind.

5. Verfahren nach Anspruch 4, wobei einzelne oder mehrere Simulationsfunktionalitäten zur Bearbeitung in der Rechnerwolke (16) ausgewählt werden und wobei resultierende Simulationsergebnisse lokal oder in der Rechnerwolke (16) weiter verwendet werden.

6. Verfahren nach Anspruch 3, 4 oder 5, wobei bei der Simulation der Bearbeitungsmaschine (10) für den dafür verwendeten digitalen Schatten (20) eine Zeitskalierung erfolgt.

7. Verfahren nach einem der Ansprüche 3, 4, 5 oder 6, wobei die Simulation der Bearbeitungsmaschine (10) in der Rechnerwolke (16) mit modularen und/oder skalierbar gestalteten Simulationsdiensten (24,26,28,30,32,34,36) erfolgt.

8. Computerprogramm mit Programmcodemitteln, um alle Schritte von jedem beliebigen der Ansprüche 1 bis 7 durchzuführen, wenn das Computerprogramm beim Zusammenwirken einer Steuerungseinrichtung (12) für eine Bearbeitungsmaschine (10) und mindestens einem Rechner (18) in einer Rechnerwolke (16) ausgeführt wird.

9. Digitales Speichermedium mit elektronisch auslesbaren Steuersignalen, die so mit einer Steuerungseinrichtung (12) für eine Bearbeitungsmaschine (10) einerseits und mindestens einem Rechner (18) in einer Rechnerwolke (16) andererseits zusammenwirken, dass jeweils alle Schritte eines Verfahrens nach einem der Ansprüche 1 bis 7 ausgeführt werden, wenn die elektronisch auslesbaren Steuersignale als Computerprogramm im Rechner (18) der Rechnerwolke (16) ausgeführt werden.

## Claims

1. Method for simulating a processing machine (10) in cloud computing (16),
wherein cloud computing (16) comprises a plurality of computers (18) which are connected in a communicative manner with one another and are suited to executing web-capable simulation services (24, 26, 28, 30, 32, 34, 36),
wherein a digital shadow (20) is formed in cloud computing (16) as a representative of the simulated processing machine (10),
**characterised in**
**that** a configuration and a state of the simulated processing machine (10) is impressed onto the digital shadow (20),
**that** with a CAM service made available in cloud computing (16) and the digital shadow (20) of the simulated processing machine (10), a calculation and validation of a tool path of the simulated processing machine (10) takes place and
**that** following a test of the simulated processing machine (10) in clouding computing, a configuration of the digital shadow (20) is impressed onto the simulated processing machine (10).

2. Method according to claim 1, wherein a state of the simulated processing machine (10) is updated continuously in the digital shadow (20).

3. Method according to one of the preceding claims, wherein the simulation takes place in accordance with a predetermined or predeterminable scaling depth.

4. Method according to claim 3, wherein a plurality of simulation levels (38, 40, 42, 44) is defined for a simulation in accordance with a predetermined or predeterminable scaling depth and at least one simulation functionality is provided in each simulation level (38, 40, 42, 44) for a modularity of the simulation in each instance.

5. Method according to claim 4, wherein individual or several simulation functionalities are selected for processing in cloud computing (16) and wherein resulting simulation results are used further locally or in cloud computing (16).

6. Method according to claim 3, 4 or 5, wherein a time scaling takes place during the simulation of the processing machine (10) for the digital shadow (20) used for this purpose.

7. Method according to one of claims 3, 4, 5 or 6, wherein the simulation of the processing machine (10) in cloud computing (16) takes place with simulation services (24, 26, 28, 30, 32, 34, 36) which are designed in a modular and/or scalable manner.

8. Computer program with program code means, in order to carry out all steps of any one of claims 1 to 7,
when the computer program is executed in the case of interaction between a control facility (12) for a processing machine (10) and at least one computer (18) in cloud computing (16) .

9. Digital storage medium with electronically readable control signals, which interact with a control facility (12) for a processing machine (10) on the one hand and at least one computer (18) in cloud computing (16) on the other hand such that in each case all steps of a method according to one of claims 1 to 7 are carried out when the electronically readable control signals are executed as a computer program in the cloud computing (16) computer (18).

## Revendications

1. Procédé de simulation d'une machine (10) de traitement dans un nuage (16) d'ordinateur,
dans lequel le nuage (16) d'ordinateur comprend une pluralité d'ordinateurs (18) reliés en communication entre eux, qui sont propres à la réalisation de services (24, 26, 28, 30, 32, 34, 36) de simulation aptes à la toile,
dans lequel on forme, dans le nuage (16) d'ordinateur, comme représentant de la machine (10) de traitement simulée, une silhouette (20) numérique,
**caractérisé en ce que**
l'on imprime à la silhouette (20) numérique une configuration et un état de la machine (10) de traitement simulé,
**en ce que**, par un service CAM mis à disposition dans le nuage (16) d'ordinateur et par la silhouette (20) numérique, la machine (10) de traitement simulée effectue un calcul et une validation d'un trajet d'outil de la machine (10) de traitement, et
**en ce que**, à la suite d'un test de la machine (10) de traitement simulée, on imprime, dans le nuage d'ordinateur, une configuration de la silhouette (20) numérique de la machine (10) de traitement simulée.

2. Procédé suivant la revendication 1, dans lequel on suit, en continu dans la silhouette (20) numérique, un état de la machine (10) de traitement simulée.

3. Procédé suivant l'une des revendications précédentes, dans lequel la simulation s'effectue conformément à une profondeur de mise à l'échelle donnée à l'avance ou pouvant l'être.

4. Procédé suivant la revendication 3, dans lequel, pour une simulation conformément à une profondeur de mise à l'échelle donnée à l'avance ou pouvant l'être, une pluralité de plans (38, 40, 42, 44) de simulation sont définis et, dans chaque plan (38, 40, 42, 44) de simulation, il est prévu, pour une modularité de la simulation, respectivement au moins une fonctionnalité de simulation.

5. Procédé suivant la revendication 4, dans lequel on choisit, pour l'usinage dans le nuage (16) d'ordinateur, une ou plusieurs fonctionnalités de simulation, et dans lequel on continue à utiliser des résultats de simulation, qui s'ensuivent localement ou dans le nuage (16) d'ordinateur.

6. Procédé suivant la revendication 3, 4 ou 5, dans lequel, lors de la simulation de la machine (10) de traitement, il s'effectue une mise à l'échelle temporelle de la silhouette (20) numérique utilisée à cet effet.

7. Procédé suivant l'une des revendications 3, 4, 5 ou 6, dans lequel la simulation de la machine (10) de traitement s'effectue dans le nuage (16) d'ordinateur par des services (24, 26, 28, 30, 32, 34, 36) de simulation de conformation modulaires et/ou pouvant être mis à l'échelle.

8. Programme d'ordinateur ayant des moyens de code de programme pour effectuer tous les stades de l'une quelconque des revendications 1 à 7, lorsque le programme d'ordinateur est réalisé en coopération avec un dispositif (12) de commande d'une machine (10) de traitement et au moins un ordinateur (18) d'un nuage (16) d'ordinateur.

9. Support de mémoire numérique comprenant des signaux de commande déchiffrables électroniquement, qui coopèrent avec un dispositif (12) de commande d'une machine (10) de traitement d'une part et avec au moins un ordinateur (18) d'un nuage (16) d'ordinateur d'autre part, de manière à exécuter tous les stades d'un procédé suivant l'une des revendications 1 à 7, lorsque les signaux de commande déchiffrables électroniquement sont réalisés sous la forme d'un programme d'ordinateur dans l'ordinateur (18) du nuage (16) d'ordinateur.
